# EUROPÄISCHE PATENTSCHRIFT

(11) **EP 1 211 132 B1**
(45) Veröffentlichungstag und Bekanntmachung des Hinweises auf die Patenterteilung: **01.06.2011**
(21) Anmeldenummer: 01123837.5
(22) Anmeldetag: 05.10.2001
(51) Int. Cl.: B60R 1/00, B60Q 1/48, B60Q 1/52

(54) **Anordnung und Verfahren zum Überwachen des Umfeldes eines Fahrzeugs**
Device and method for monitoring the environment of a vehicle
Dispositif et procédé pour surveiller l'environnement d'un véhicule

(30) Priorität: 29.11.2000 DE 10059315
(43) Veröffentlichungstag der Anmeldung: 05.06.2002
(73) Patentinhaber: ROBERT BOSCH GMBH, 70442 Stuttgart (DE)
(72) Erfinder: Janssen, Holger, 31840 Hessisch Oldendorf (DE)

(56) Entgegenhaltungen:
- EP-A- 1 004 916
- DE-A1- 19 741 896
- JP-A- 9 202 180

## Beschreibung

Die Erfindung betrifft eine Anordnung zum Überwachen des Umfeldes eines Fahrzeugs mit mindestens einer im Weitwinkelbereich arbeitenden Kamera, einer Bildverarbeitungseinheit, welche Mittel zum Entzerren der von der Kamera aufgenommenen Bilder aufweist, und einer Bildanzeigeinheit. Die Erfindung betrifft ferner ein Verfahren zum Überwachen des Umfeldes eines Fahrzeugs mit den Schritten: Erfassen eines Weitwinkelbereiches mit einer Kamera, Entzerren der von der Kamera aufgenommenen Bilder in einer Bildverarbeitungseinheit und Anzeigen mindestens eines Bildes mit einer Bildanzeigeeinheit.

### Stand der Technik

Zur Überwachung des Umfelds eines Fahrzeugs sind zahlreiche Systeme bekannt. Derartige Systeme dienen beispielsweise zur Realisierung einer Unfallverhütung ("Precrash"), einer automatischen Fahrsteuerung ("automatic cruise control" (ACC)) oder auch der Beobachtung des toten Winkels bezüglich des Gesichtsfeldes des Fahrers. Es kommen Systeme zum Einsatz, welche sich unterschiedlichen Sensoren bedienen. Bekannt sind beispielsweise Radarsensoren, Lidarsensoren, Ultraschallsensoren und Videosensoren.

Der rückwärtige Fahrzeugbereich stellt einen schwierig zu überwachenden Bereich des Fahrzeugumfeldes dar. Eine Überwachung dieses Bereiches ist zum Beispiel beim Einparken und Rangieren in unübersichtlichen Situationen sinnvoll und wünschenswert.

Auf einer Videoüberwachung basierende Systeme zur Überwachung des rückwärtigen Fahrzeugumfeldes werden derzeit mit vielen Zielsetzungen und für zahlreiche Anwendungsbereiche entwickelt. In einigen Anwendungsbereichen, wie beispielsweise bei der Verwendung von Videosystemen als Rückspiegelersatz beziehungsweise als Rückspiegelergänzung oder als Einparkhilfe werden dem Fahrer Kamerabilder angezeigt, die es ihm erlauben, sonst nicht direkt einsehbare Bereiche und tote Winkel einzusehen und zu überwachen.

Es ist bekannt, die von Videokameras aufgenommenen Bilder direkt anzuzeigen oder geringfügige Anpassungen im Hinblick auf den Bildinhalt vorzunehmen. Derartige Anpassungen betreffen beispielsweise die Helligkeit und den Kontrast des Bildinhaltes.

Aufgrund der direkten Anzeige der Bildinhalte ist es aus Sicherheitserwägungen geboten, dass die Aufnahmeoptiken nur geringe optische Verzerrungen aufweisen. Nur hierdurch ist sichergestellt, dass der Betrachter, im allgemeinen der Fahrzeugführer, den Bildinhalt problemlos interpretieren kann. Dies schränkt den Bereich der verwendbaren Optiken auf verzerrungsarme Objektive ein. Somit können nur Objektive verwendet werden, welche einen vergleichsweise geringen Sichtwinkel aufweisen.

Will man nun mit einem System, welches auf einer Videokamera basiert, größere Bereiche des Fahrzeugumfeldes überwachen, so ist es erforderlich mehrere Kameras zu installieren, welche jeweils unterschiedliche Bereiche des Umfeldes überwachen. Auf der Grundlage dieser mehreren Kameras ist es nun möglich, dem Fahrer mehrere Bilder anzuzeigen. Dies hat den Nachteil, dass an den Fahrer zusätzliche Anforderungen gestellt werden, da dieser mit zusätzlicher gedanklicher Leistung die mehreren Bilder dem jeweiligen Ausschnitt des Fahrzeugumfeldes zuordnen muss. Eine weitere Möglichkeit, die Information von mehreren Kameras zur Anzeige zu bringen, besteht darin, die Informationen zu einem Gesamtbild zu kombinieren. Damit wird das Gesamtsystem komplex und unübersichtlich. Ferner kommt es häufig zu optischen Störungen im Bereich der aneinander angrenzenden Bilder.

Ebenfalls wurde bereits vorgeschlagen, anstelle der Verwendung mehrerer Kameras, eine schwenkbare Kamera zu verwenden. Dies hat jedoch unter anderem den Nachteil, dass eine aufwendige Mechanik zur Positionierung erforderlich ist.

Die gattungsbildende JP 09 202 180 A zeigt ein On-Board-Kamerasystem, welches zur Entzerrung von Teilausschnitten eines Bildes einer Weitwinkelkamera ausgelegt ist.

Die EP 1 004 916 A zeigt ein Weitwinkel-Bildverarbeitungssystem für Fahrzeuge.

Die DE 197 41 896 A1 zeigt eine Vorrichtung zur bildlichen Darstellung von Bereichen der Umgebung eines Kraftfahrzeugs.

### Vorteile der Erfindung

Die Erfindung baut auf der gattungsgemäßen Anordnung dadurch auf, dass die Mittel zum Entzerren adaptiv auf der Grundlage eines ausgewählten Bildausschnittes arbeiten und dass die Mittel zum Entzerren adaptiv auf der Grundlage einer ausgewählten Blickrichtung arbeiten. Durch die Weitwinkligkeit der im Rahmen der erfindungsgemäßen Anordnung verwendeten Kamera kann ein großer Bereich des Fahrzeugumfeldes mit nur einer Kamera überwacht werden. Die durch die Weitwinkelobjektive entstehenden Verzerrungen werden nun erfindungsgemäß entzerrt, wobei diese Entzerrung adaptiv auf der Grundlage eines ausgewählten Bildausschnittes arbeitet. Ferner arbeiten die Mittel zum Entzerren adaptiv auf der Grundlage einer ausgewählten Blickrichtung. Insgesamt kann dem Fahrer somit eine hochselektive Information geliefert werden, welche zudem aufgrund der Entzerrung und einer intuitiven wirklichkeitsgetreuen Darstellung äußerst informativ ist. Im Rahmen der vorliegenden Erfindung kann die Entzerrung eine beliebige zweidimensionale Abbildung der Kamerabildebene in die Bildebene des Anzeigebildes sein. Die Abbildungsvorschrift kann beliebige mathematische Komplexität aufweisen. Grundsätzlich projiziert die Entzerrung das verzerrte Bild auf eine plane Bildebene. Aufgrund der Variabilität der mathematische Abbildungsmöglichkeiten kann die Entzerrung des Bildinhaltes auch eine Spiegelung des Bildes oder andere beliebige geometrische Operatoren beinhalten. Mit der Anpassung auf der Grundlage einer ausgewählten Blickrichtung lassen sich beispielsweise eine Panoramaansicht oder auch eine Vogelperspektive realisieren. Die Panoramaansicht eignet sich besonders zum groben Rangieren des Fahrzeugs, da sie im wesentlichen dem Blick nach hinten aus der Heckscheiben entspricht. Die Vogelperspektive kann beim zentimetergenauen Einparken genutzt werden, da auf diese Weise Abstände zu Hindernissen vom Fahrer besonders gut beurteilt werden können. Auch andere beliebige Blickrichtungen im Aufnahmebereich des Sensors sind denkbar.

Vorzugsweise erfolgen die Anpassung eines ausgewählten Bildausschnittes und/oder einer ausgewählten Blickrichtung durch den Fahrer. Der Fahrer kann also aktiv die erfindungsgemäße Adaption der Mittel zum Entzerren beeinflussen.

Es kann aber auch vorteilhaft sein, dass die Anpassung eines ausgewählten Bildausschnittes und/oder einer ausgewählten Blickrichtung automatisch erfolgt. Für diese automatische Anpassung des ausgewählten Bildausschnittes und/oder der ausgewählten Blickrichtung können zahlreiche Informationen verwertet werden, wobei die Einbindung dieser Informationen vorteilhaft in die mathematischen Algorithmen erfolgt.

Besonders bevorzugt ist, wenn die Anpassung eines ausgewählten Bildausschnittes und/oder einer ausgewählten Blickrichtung automatisch auf der Grundlage des Bildinhaltes erfolgt. Beispielhaft kann hier erwähnt werden, dass beim plötzlichen Erscheinen eines Objektes in dem von der Kamera erfassten Bereich die Blickrichtung, welche für den Fahrer dargestellt wird, in Richtung dieses Objektes gelenkt wird. Ferner ist es möglich, den Bildausschnitt so zu wählen, dass das Objekt und relevante Information im Umfeld dieses Objektes dargestellt werden.

Es kann vorteilhaft sein, wenn die Anpassung eines ausgewählten Bildausschnittes und/oder einer ausgewählten Blickrichtung automatisch beim Einlegen des Rückwärtsganges initialisiert wird. Diese Initialisierung kann parallel zur Aktivierung der Anzeigevorrichtung erfolgen, wobei die Initialisierung eine Entzerrung mit einem Standardverhalten umfasst.

Besonders vorteilhaft ist es, wenn die Anpassung eines ausgewählten Bildausschnittes und/oder einer ausgewählten Blickrichtung automatisch auf der Grundlage des Lenkwinkels des Fahrzeugs erfolgt. Da die Richtung, in welcher das Fahrzeug fährt, von dem Lenkwinkel bestimmt wird, hat dieser auch Einfluss auf den Bereich, welcher für den Fahrer besonders interessant ist. Daher ist die Anpassung der Anzeigeparameter auf der Grundlage des Lenkwinkels besonders nützlich.

Es kann auch vorteilhaft sein, wenn die Anpassung eines ausgewählten Bildausschnittes und/oder einer ausgewählten Blickrichtung automatisch auf der Grundlage der Geschwindigkeit des Fahrzeugs erfolgt. Fährt das Fahrzeug langsam, so möchte der Fahrer in der Regel fein manövrieren. Hier ist eine genauere Betrachtung eines kleinen Bildbereiches sinnvoll, welcher zudem häufig in Richtung des Stoßfängers des Fahrzeugs gerichtet ist. Fährt das Fahrzeug jedoch schneller, so will der Fahrer das Fahrzeug im allgemeinen nur grob in Position bringen. Dabei ist die Anzeige und die Entzerrung eines großen Bildbereiches vorgesehen. Als Blickrichtung wird hierbei häufig die Panoramaperspektive bevorzugt.

Es kann auch vorteilhaft sein, dass die Anpassung eines ausgewählten Bildausschnittes und/oder einer ausgewählten Blickrichtung automatisch auf der Grundlage des Nickwinkels der Kamera bezüglich der Straße erfolgen. Der Nickwinkel der Kamera wird von dem Nickwinkel des Fahrzeugs bezüglich der Fahrbahn beeinflusst. Daher kann es sinnvoll sein, diesen bei der Auswahl des Bildausschnittes beziehungsweise der Bildausrichtung zu berücksichtigen.

Bei einer vorteilhaften Ausführungsform der erfindungsgemäßen Anordnung ist die Kamera eine HDRC-Kamera. Eine solche HDRC-Kamera ("high dynamic range camera") hat eine große Helligkeitsdynamik, so dass sie der Verbesserung der Bildqualität insbesondere in kritischen Beleuchtungssituationen (Dunkelheit, Gegenlicht, Schnee) dienen kann.

Ebenfalls kann vorteilhaft sein, wenn durch eine Ausgabe der Bildverarbeitungseinheit eine Aktorik beeinflussbar ist. Eine solche Aktorik kann direkt in das Fahrverhalten des Fahrzeugs eingreifen, beispielsweise durch Beeinflussung des Bremsverhaltens.

Die Erfindung baut auf dem gattungsgemäßen Verfahren dadurch auf, dass das Entzerren adaptiv auf der Grundlage eines ausgewählten Bildausschnittes erfolgt und dass das Entzerren adaptiv auf der Grundlage einer ausgewählten Blickrichtung erfolgt. Durch die Weitwinkligkeit der im Rahmen der erfindungsgemäßen Anordnung verwendeten Kamera kann ein großer Bereich des Fahrzeugumfeldes mit nur einer Kamera überwacht werden. Die durch die Weitwinkelobjektive entstehenden Verzerrungen werden nun erfindungsgemäß entzerrt, wobei diese Entzerrung adaptiv auf der Grundlage eines ausgewählten Bildausschnittes arbeitet. Ferner arbeiten die Mittel zum Entzerren adaptiv auf der Grundlage einer ausgewählten Blickrichtung. Insgesamt kann dem Fahrer somit eine hochselektive Information geliefert werden, welche zudem aufgrund der Entzerrung und einer intuitiven wirklichkeitsgetreuen Darstellung äußerst informativ ist. Im Rahmen der vorliegenden Erfindung kann die Entzerrung eine beliebige zweidimensionale Abbildung der Kamerabildebene in die Bildebene des Anzeigebildes sein. Die Abbildungsvorschrift kann beliebige mathematische Komplexität aufweisen. Grundsätzlich projiziert die Entzerrung das verzerrte Bild auf eine plane Bildebene, so dass eine plane Sicht der Welt bezogen auf die gewählte Blickrichtung entsteht. Aufgrund der Variabilität der mathematischen Abbildungsmöglichkeiten kann die Entzerrung des Bildinhaltes auch eine Spiegelung des Bildes oder andere beliebige geometrische Operatoren beinhalten. Mit der Anpassung auf der Grundlage einer ausgewählten Blickrichtung lassen sich beispielsweise eine Panoramaansicht oder auch eine Vogelperspektive realisieren. Die Panoramaansicht eignet sich besonders zum groben Rangieren des Fahrzeugs, da sie im wesentlichen den Blick nach hinten aus der Heckscheiben entspricht. Die Vogelperspektive kann beim zentimetergenauen Einparken genutzt werden, da auf diese Weise mit Abstände zu Hindernissen vom Fahrer besonders gut beurteilt werden können.

Bevorzugt erfolgen die Anpassung eines ausgewählten Bildausschnittes und/oder einer ausgewählten Blickrichtung durch den Fahrer. Der Fahrer kann also aktiv die erfindungsgemäße Adaption der Mittel zum Entzerren beeinflussen.

Es ist von Vorteil, wenn die Anpassung eines ausgewählten Bildausschnittes und/oder einer ausgewählten Blickrichtung automatisch erfolgt. Für diese automatische Anpassung des ausgewählten Bildausschnittes und/oder der ausgewählten Blickrichtung können zahlreiche Informationen verwertet werden, wobei die Einbindung dieser Informationen vorteilhaft in die mathematischen Algorithmen erfolgt.

Weiterhin ist es vorteilhaft, wenn die Anpassung eines ausgewählten Bildausschnittes und/oder einer ausgewählten Bildrichtung automatisch auf der Grundlage des Bildinhaltes erfolgt. Beispielhaft kann hier erwähnt werden, dass beim plötzlichen Erscheinen eines Objektes in dem von der Kamera erfassten Bereich die Blickrichtung, welche für den Fahrer dargestellt wird, in Richtung dieses Objektes gelenkt wird. Ferner ist es möglich, den Bildausschnitt so zu wählen, dass das Objekt und relevante Information im Umfeld dieses Objektes dargestellt werden.

Besonders vorteilhaft ist es, wenn die Anpassung eines ausgewählten Bildausschnittes und/oder einer ausgewählten Blickrichtung automatisch bei Einlegen des Rückwärtsganges initialisiert werden. Diese Initialisierung kann parallel zur Aktivierung der Anzeigevorrichtung erfolgen, wobei die Initialisierung eine Entzerrung mit einem Standardverhalten umfasst.

Von besonderem Vorteil ist es, wenn die Anpassung eines ausgewählten Bildausschnittes und/oder einer ausgewählten Blickrichtung automatisch auf der Grundlage des Lenkwinkels des Fahrzeugs erfolgt. Da die Richtung, in welcher das Fahrzeug fährt, von dem Lenkwinkel bestimmt wird, hat dieser auch Einfluss auf den Bereich, welcher für den Fahrer besonders interessant ist. Daher ist die Anpassung der Anzeigeparameter auf der Grundlage des Lenkwinkels besonders nützlich.

Das Verfahren ist auch dann von Vorteil, wenn die Anpassung eines ausgewählten Bildausschnittes und/oder einer ausgewählten Blickrichtung automatisch auf der Grundlage der Geschwindigkeit des Fahrzeugs erfolgt. Fährt das Fahrzeug langsam, so möchte der Fahrer in der Regel fein manövrieren. Hier ist eine genauere Betrachtung eines kleinen Bildbereiches sinnvoll, welcher zudem häufig in Richtung des Stoßfängers des Fahrzeugs gerichtet ist. Fährt das Fahrzeug jedoch schneller, so will der Fahrer das Fahrzeug im allgemeinen nur grob in Position bringen. Dabei ist die Anzeige und die Entzerrung eines großen Bildbereiches vorgesehen. Als Blickrichtung wird häufig die Panoramaperspektive bevorzugt.

Nützlicherweise erfolgen die Anpassung eines ausgewählten Bildausschnittes und/oder einer ausgewählten Blickrichtung automatisch auf der Grundlage des Nickwinkels der Kamera bezüglich der Straße. Der Nickwinkel der Kamera wird von dem Nickwinkel des Fahrzeugs bezüglich der Fahrbahn beeinflusst. Daher kann es sinnvoll sein, diesen bei der Auswahl des Bildausschnittes beziehungsweise der Bildausrichtung zu berücksichtigen.

Besonders vorteilhaft ist es, wenn als Kamera eine HDRC-Kamera verwendet wird. Eine solche HDRC-Kamera ("high dynamic range camera") hat eine große Helligkeitsdynamik, so dass sie der Verbesserung der Bildqualität insbesondere in kritischen Beleutungssituationen (Dunkelheit, Gegenlicht, Schnee) dienen kann.

Ebenfalls kann vorteilhaft sein, wenn durch eine Ausgabe der Bildverarbeitungseinheit eine Aktorik beeinflusst wird. Eine solche Aktorik kann direkt in das Fahrverhalten des Fahrzeugs eingreifen, beispielsweise durch Beeinflussung des Bremsverhaltens.

Der Erfindung liegt die überraschende Erkenntnis zugrunde, dass durch die adaptive Entzerrung auf der Grundlage eines ausgewählten Bildausschnittes und auf der Grundlage einer ausgewählten Blickrichtung dem Fahrer besonders relevante Informationen übermittelt werden können. Die Auswahl beziehungsweise die Anpassung dieser Informationen können einerseits von dem Fahrer bestimmt werden. Andererseits ist es auch möglich, die Anpassung automatisch zu beeinflussen beziehungsweise vollständig automatisch zu steuern. Im Vergleich zu Systemen, bei denen mehrere Kameras verwendet werden, um einen großen Blickwinkel zu erfassen, zeichnet sich die erfindungsgemäße Anordnung dadurch aus, dass sie mit einer einzigen Kamera auskommt, wobei zum einen der Aufwand verringert wird und zum anderen keine Probleme im Hinblick auf die Übergangsbereiche zwischen den Bildern der verschiedenen Kameras entstehen.

### Zeichnungen

Die Erfindung wird nun mit Bezug auf die begleitenden Zeichnungen anhand bevorzugter Ausführungsformen beispielhaft erläutert.

Dabei zeigt:
- Figur 1: eine schematische Darstellung zur Erläuterung der Erfindung;
- Figur 2: eine schematische Draufsicht auf ein Kraftfahrzeug zur Erläuterung der Erfindung;
- Figur 3: eine seitliche Teilansicht eines Kraftfahrzeugs zur Erläuterung der Erfindung; und
- Figur 4: ein systematisches Blockschaltbild zur Erläuterung einer erfindungsgemäßen Anordnung.

### Beschreibung der Ausführungsbeispiele

In der nachfolgenden Beschreibung der Ausführungsbeispiele bezeichnen gleiche Bezugszeichen vergleichbare Komponente.

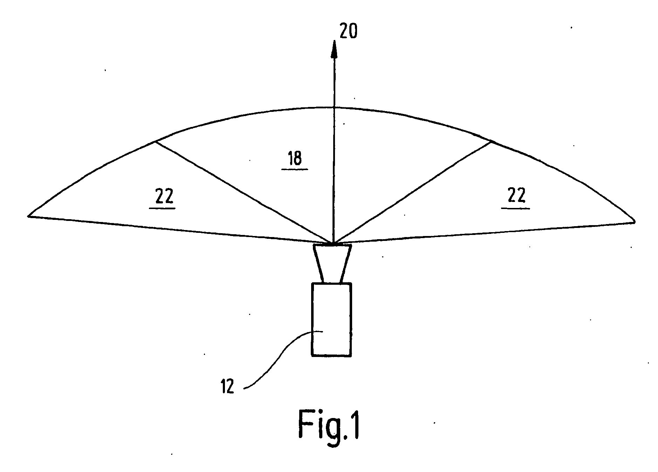

In Figur 1 ist eine Kamera 12 dargestellt, welche mittels einer Weitwinkeloptik einen nahezu halbkreisförmigen Sichtwinkel 22 erfasst. Würde man das so von der Kamera 12 erfasste Bild auf eine Anzeigevorrichtung bringen, so wäre das Bild verzerrt. Folglich käme es mitunter zu Schwierigkeiten beim Erkennen des Bildinhaltes. Erfindungsgemäß wird nun ein kleinerer Bildausschnitt 18 ausgewählt, wobei dieser beispielhaft in der Blickrichtung 20, welche vorliegend die Geradeausrichtung der Kamera 12 ist, dargestellt ist. Die Auswahl sowohl der Blickrichtung 20 als auch des Bildausschnittes 18 kann angepasst werden, wobei diese Anpassung durch eine Bedienungsperson, beispielsweise den Fahrer, beeinflussbar ist und/oder automatisch erfolgt.

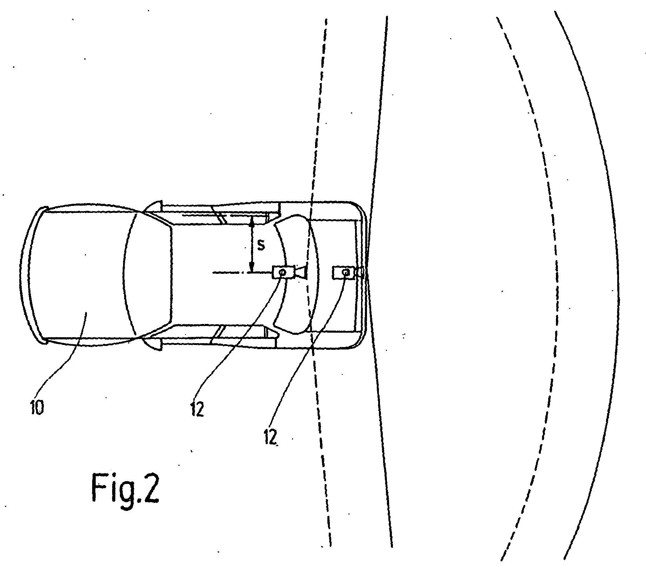

In Figur 2 ist eine Draufsicht auf ein Fahrzeug 10 dargestellt, welche mögliche Positionierungen von Kameras 12 veranschaulicht. Die Position der Kameras wird durch den Parameter S beschrieben. Die Kameras 12, welche in Figur 2 dargestellt sind, dienen der Beobachtung des rückwärtigen Fahrzeugraums. Zwei beispielhafte Bereiche, die von den Kameras 12 überwacht werden können, sind dargestellt.

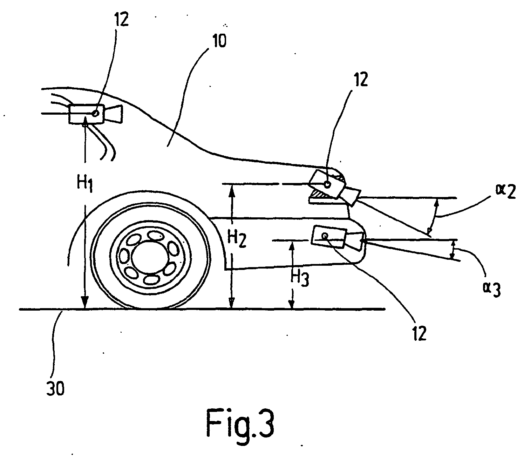

In Figur 3 ist eine seitliche Teilansicht eines Fahrzeugs 10 dargestellt, wobei auch hier beispielhafte Positionierungen von Kameras 12 zu erkennen sind. Die Kameras sind in den Höhen H₁, H₂ und H₃ angeordnet. Die Kamera, welche in der Höhe H₁ angeordnet ist, hat einen Neigungswinkel von 0° bezüglich der Fahrbahn 30. Auf diese Weise wird eine Panoramaperspektive ermöglicht. Die Kamera 12, welche in der Höhe H₂ angeordnet ist, hat einen Neigungswinkel α₂ gegenüber der Fahrbahn 30. Aus dieser Vogelperspektive können besonders gut Manöver beobachtet werden, bei denen es auf eine besondere Genauigkeit ankommt. Als weitere mögliche Anordnung ist die Kamera 12, welche in der Höhe H₃ angeordnet ist um den Winkel α₃ gegenüber der Fahrbahn 30 geneigt. Aus allen möglichen Kameraanordnungen können jedoch alle Perspektiven berechnet werden. Die Kamera mit der Höhe H₁ kann auch eine Projektion der Vogelperspektive liefern, indem die Entzerrung des Kamerabildes die Vogelperspektive aus dem Bild der Kamera berechnet. Grundsätzlich ist die Kameraposition im Hinblick auf Höhe und Ausrichtung nicht für die Blickrichtung des entzerrten Bildes entscheidend. Die Blickrichtung wird per Entzerrungsalgorithmus festgelegt. Jedoch muss die Richtung im Bild der Kamera enthalten sein.

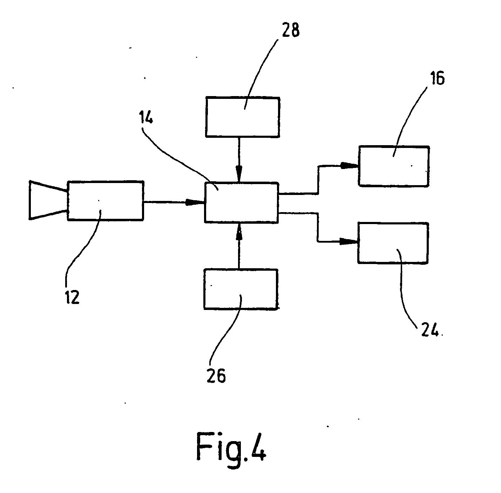

Figur 4 zeigt ein schematische Blockschaltbild zur Erläuterung einer erfindungsgemäßen Anordnung. Eine Kamera 12 gibt Informationen an eine Bildverarbeitungseinheit 14 aus. Diese Bildverarbeitungseinheit wird weiterhin aus einer Einheit 26 mit Kameraparametern und ferner aus einer Einheit 28 mit Fahrzeugparametern gespeist. Die Bildverarbeitungseinheit 14 erzeugt durch die Verwendung geeigneter mathematischer Algorithmen Bildanzeigeinformation für eine Bildanzeigeeinheit 16, welche in erfindungsgemäßer Weise entzerrt ist. Weiterhin kann vorgesehen sein, dass die Bildverarbeitungseinheit 14 eine Ausgabe an eine Aktorik 24 liefert, welche direkt in das Fahrverhalten des Fahrzeugs, beispielsweise das Lenkverhalten oder das Bremsverhalten eingreift. Als Informationen, welche von der Einheit mit Fahrzeugparametern 28 geliefert wird, sind Informationen über den eingelegten Gang, den Lenkwinkel des Fahrzeugs, die Geschwindigkeit des Fahrzeugs und den Nickwinkel des Fahrzeugs bezüglich der Fahrbahn möglich.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedenen Änderungen und Modifikationen möglich, ohne den Umfang der Erfindung sowie ihre Äquivalente zu verlassen.

## Patentansprüche

1. Anordnung zum Überwachen des Umfeldes eines Fahrzeugs (10) mit
- mindestens einer im Weitwinkelbereich arbeitenden Kamera (12), die einen großen Bereich (22) des Fahrzeugumfelds überwacht, um ein Bild zu erfassen;
- einer Bildverarbeitungseinheit (14), welche Mittel zum Entzerren der von der Kamera (12) aufgenommenen Bilder aufweist, und
- einer Bildanzeigeeinheit (16),
**dadurch gekennzeichnet,**
- **dass** die Mittel zum Entzerren auf der Grundlage eines ausgewählten Bildausschnittes (18) arbeiten, wobei der Bildausschnitt einen kleineren Bereich als der von der Kamera überwachte große Bereich darstellt, wobei eine Auswahl des Bildausschnitts anpassbar ist und wobei die Anpassung der Auswahl des Bildausschnitts durch eine Bedienperson oder automatisch erfolgt und
- **dass** die Mittel zum Entzerren auf der Grundlage einer ausgewählten Blickrichtung (20) arbeiten, wobei eine Auswahl der Blickrichtung anpassbar ist und wobei die Anpassung der Auswahl der Blickrichtung durch eine Bedienperson oder automatisch erfolgt.

2. Anordnung nach Anspruch 1, **dadurch gekennzeichnet, dass** die Anpassung eines ausgewählten Bildausschnittes (18) und/oder einer ausgewählten Blickrichtung (20) automatisch auf der Grundlage des Bildinhaltes erfolgt.

3. Anordnung nach Anspruch 1 oder 2, **dadurch gekennzeichnet, dass** die Anpassung eines ausgewählten Bildausschnittes (18) und/oder einer ausgewählten Blickrichtung (20) automatisch bei Einlegen des Rückwärtsganges initialisiert wird.

4. Anordnung nach einem der Ansprüche 1 bis 2, **dadurch gekennzeichnet, dass** die Anpassung eines ausgewählten Bildausschnittes (18) und/oder einer ausgewählten Blickrichtung (20) automatisch auf der Grundlage des Lenkwinkels des Fahrzeugs erfolgt.

5. Anordnung nach einem der Ansprüche 1 bis 4, **dadurch gekennzeichnet, dass** die Anpassung eines ausgewählten Bildausschnittes (18) und/oder einer ausgewählten Blickrichtung (20) automatisch auf der Grundlage der Geschwindigkeit des Fahrzeugs (10) erfolgt.

6. Anordnung nach einem der Ansprüche 1 bis 5, **dadurch gekennzeichnet, dass** die Anpassung eines ausgewählten Bildausschnittes (18) und/oder einer ausgewählten Blickrichtung (20) automatisch auf der Grundlage des Nickwinkels der Kamera (12) bezüglich der Straße (30) erfolgt.

7. Anordnung nach einem der vorangehenden Ansprüche, **dadurch gekennzeichnet, dass** die Kamera (12) eine HDRC-Kamera ist.

8. Anordnung nach einem der vorangehenden Ansprüche, **dadurch gekennzeichnet, dass** durch eine Ausgabe der Bildverarbeitungseinheit (14) eine Aktorik (24) beeinflusst wird.

9. Verfahren zum Überwachen des Umfeldes eines Fahrzeugs mit den Schritten:
- Erfassen eines Winkelbereiches (22) mit einer Kamera, die einen großen Bereich (22) des Fahrzeugumfelds überwacht, um ein Bild zu erfassen,
- Entzerren der von der Kamera aufgenommen Bilder in einer Bildverarbeitungseinheit (14),
- Anzeigen mindestens eines Bildes mit einer Bildanzeigeeinheit (16),
**dadurch gekennzeichnet,**
- **dass** das Entzerren auf der Grundlage eines ausgewählten Bildausschnittes (18) erfolgt, wobei der Bildausschnitt einen kleineren Bereich als der von der Kamera überwachte große Bereich betrifft, wobei eine Auswahl des Bildausschnitts
- anpassbar ist und wobei die Anpassung der Auswahl des Bildausschnitts durch eine Bedienperson oder automatisch erfolgt und
- **dass** das Entzerren auf der Grundlage einer ausgewählten Blickrichtung (20) erfolgt, wobei eine Auswahl der Blickrichtung anpassbar ist und wobei die Anpassung der Auswahl der Blickrichtung durch eine Bedienperson oder automatisch erfolgt.

10. Verfahren nach Anspruch 9, **dadurch gekennzeichnet, dass** die Anpassung eines ausgewählten Bildausschnittes (18) und/oder einer ausgewählten Blickrichtung (20) automatisch auf der Grundlage des Bildinhaltes erfolgt.

11. Verfahren nach einem der Ansprüche 9 oder 10, **dadurch gekennzeichnet, dass** die Anpassung eines ausgewählten Bildausschnittes (18) und/oder einer ausgewählten Blickrichtung (20) automatisch bei Einlegen des Rückwärtsganges initialisiert wird.

12. Verfahren nach einem der Ansprüche 9 bis 11, **dadurch gekennzeichnet, dass** die Anpassung eines ausgewählten Bildausschnittes (18) und/oder einer ausgewählten Blickrichtung (20) automatisch auf der Grundlage des Lenkwinkels des Fahrzeugs (10) erfolgt.

13. Verfahren nach einem der Ansprüche 9 bis 12, **dadurch gekennzeichnet, dass** die Anpassung eines ausgewählten Bildausschnittes (18) und/oder einer ausgewählten Blickrichtung (20) automatisch auf der Grundlage der Geschwindigkeit des Fahrzeugs (10) erfolgt.

14. Verfahren nach einem der Ansprüche 9 bis 13, **dadurch gekennzeichnet, dass** die Anpassung eines ausgewählten Bildausschnittes (18) und/oder einer ausgewählten Blickrichtung (20) automatisch auf der Grundlage des Nickwinkels der Kamera (12) bezüglich der Straße (30) erfolgt.

15. Verfahren nach einem der Ansprüche 9 bis 14, **dadurch gekennzeichnet, dass** als Kamera (12) eine HDRC-Kamera verwendet wird.

16. Verfahren nach einem der Ansprüche 9 bis 15, **dadurch gekennzeichnet, dass** durch eine Ausgabe der Bildverarbeitungseinheit (14) eine Aktorik (24) beeinflusst wird.

## Claims

1. Arrangement for monitoring the surroundings of a vehicle (10), having
- at least one camera (12), which operates in the wide angle range and monitors a large area (22) of the vehicle surroundings in order to acquire an image,
- an image processing unit (14) which has means for correcting the distortion of the images recorded by the camera (12), and
- an image display unit (16),
**characterized in that**
- the means for correcting distortion operate on the basis of a selected image segment (18), the image segment constituting a smaller area than the large area monitored by the camera, a selection of the image section being adaptable, and the adaptation of the selection of the image section being performed by an operator or automatically, and
- **in that** the means for correcting distortion operate on the basis of a selected viewing direction (20), a selection of the viewing direction being adaptable and the adaptation of the selection of the viewing direction being performed by an operator or automatically.

2. Arrangement according to Claim 1, **characterized in that** the adaptation of a selected image section (18) and/or of a selected viewing direction (20) is performed automatically on the basis of the image content.

3. Arrangement according to Claim 1 or 2, **characterized in that** the adaptation of a selected image section (18) and/or of a selected viewing direction (20) is initialized automatically upon engagement of the reverse gear.

4. Arrangement according to either of Claims 1 and 2, **characterized in that** the adaptation of a selected image section (18) and/or of a selected viewing direction (20) is performed automatically on the basis of the steering angle of the vehicle.

5. Arrangement according to one of Claims 1 to 4, **characterized in that** the adaptation of a selected image section (18) and/or of a selected viewing direction (20) is performed automatically on the basis of the speed of the vehicle (10).

6. Arrangement according to one of Claims 1 to 5, **characterized in that** the adaptation of a selected image section (18) and/or of a selected viewing direction (20) is performed automatically on the basis of the pitch angle of the camera (12) with reference to the road (30).

7. Arrangement according to one of the preceding claims, **characterized in that** the camera (12) is an HDRC camera.

8. Arrangement according to one of the preceding claims, **characterized in that** an actuator (24) is influenced by an output of the image processing unit (14).

9. Method for monitoring the surroundings of a vehicle, having the steps of:
- detecting an angle range (22) with the aid of a camera which monitors a large area (22) of the vehicle surroundings in order to acquire an image,
- correcting the distortion of the images recorded by the camera in an image processing unit (14)
- displaying at least one image with the aid of an image display unit (16),
**characterized**
- **in that** the correction of distortion is performed on the basis of a selected image section (18), the image segment constituting a smaller area than the large area monitored by the camera, a selection of the image section being adaptable, and the adaptation of the selection of the image section being performed by an operator or automatically, and
- **in that** the correction of the distortion is performed on the basis of a selected viewing direction (20), a selection of the viewing direction being adaptable and the adaptation of the selection of the viewing direction being performed by an operator or automatically.

10. Method according to Claim 9, **characterized in that** the adaptation of a selected image section (18) and/or of a selected viewing direction (20) is performed automatically on the basis of the image content.

11. Method according to either of Claims 9 and 10, **characterized in that** the adaptation of a selected image section (18) and/or of a selected viewing direction (20) is initialized automatically upon engagement of the reverse gear.

12. Method according to one of Claims 9 to 11, **characterized in that** the adaptation of a selected image section (18) and/or of a selected viewing direction (20) is performed automatically on the basis of the steering angle of the vehicle (10).

13. Method according to one of Claims 9 to 12, **characterized in that** the adaptation of a selected image section (18) and/or of a selected viewing direction (20) is performed automatically on the basis of the speed of the vehicle (10).

14. Method according to one of Claims 9 to 13, **characterized in that** the adaptation of a selected image section (18) and/or of a selected viewing direction (20) is performed automatically on the basis of the pitch angle of the camera (12) with reference to the road (30).

15. Method according to one of Claims 9 to 14, **characterized in that** the camera (12) is an HDRC camera.

16. Method according to one of Claims 9 to 15, **characterized in that** an actuator (24) is influenced by an output of the image processing unit (14).

## Revendications

1. Ensemble de surveillance de l'environnement d'un véhicule (10), présentant
- au moins une caméra (12) qui travaille dans une large plage angulaire et qui surveille une grande partie (22) de l'environnement du véhicule pour saisir une image,
- une unité (14) de traitement d'image qui présente des moyens de défloutage des images enregistrées par la caméra (12) et
- une unité (16) d'affichage d'image,
**caractérisé**
- **en ce que** les moyens de défloutage travaillent sur la base d'une partie sélectionnée (18) de l'image, cette partie de l'image représentant une zone plus petite que la grande zone surveillée par la caméra, la sélection de la partie d'image pouvant être adaptée et l'adaptation de la sélection de la partie d'image s'effectuant par un opérateur ou automatiquement et
- **en ce que** les moyens de défloutage travaillent sur la base d'une direction d'observation (20) sélectionnée, la sélection de la direction d'observation pouvant être adaptée et l'adaptation de la sélection de la direction d'observation s'effectuant par un opérateur ou automatiquement.

2. Ensemble selon la revendication 1, **caractérisé en ce que** l'adaptation d'une partie sélectionnée (18) de l'image et/ou d'une direction sélectionnée d'observation (20) s'effectue automatiquement sur la base du contenu de l'image.

3. Ensemble selon les revendications 1 ou 2, **caractérisé en ce que** l'adaptation d'une partie sélectionnée (18) de l'image et/ou d'une direction sélectionnée d'observation (20) est lancée automatiquement lors de l'engagement d'un rapport de transmission arrière.

4. Ensemble selon l'une des revendications 1 et 2, **caractérisé en ce que** l'adaptation d'une partie sélectionnée (18) de l'image et/ou d'une direction sélectionnée d'observation (20) s'effectue automatiquement sur la base de l'angle de braquage du véhicule.

5. Ensemble selon l'une des revendications 1 à 4, **caractérisé en ce que** l'adaptation d'une partie sélectionnée (18) de l'image et/ou d'une direction sélectionnée d'observation (20) s'effectue automatiquement sur la base de la vitesse du véhicule (10).

6. Ensemble selon l'une des revendications 1 à 5, **caractérisé en ce que** l'adaptation d'une partie sélectionnée (18) de l'image et/ou d'une direction sélectionnée d'observation (20) s'effectue automatiquement sur la base de l'angle d'inclinaison de la caméra (12) par rapport à la chaussée (30).

7. Ensemble selon l'une des revendications précédentes, **caractérisé en ce que** la caméra (12) est une caméra HDRC.

8. Ensemble selon l'une des revendications précédentes, **caractérisé en ce qu'**une sortie de l'unité (14) de traitement d'image agit sur un ensemble (24) d'actionneurs.

9. Procédé de surveillance de l'environnement d'un véhicule, présentant les étapes qui consistent à :
- détecter une plage angulaire (22) à l'aide d'une caméra qui surveille une grande partie (22) de l'environnement du véhicule pour saisir une image,
- déflouter des images enregistrées par la caméra dans une unité (14) de traitement d'image,
- afficher au moins une image sur une unité (16) d'affichage d'image,
**caractérisé en ce que**
- le défloutage s'effectue sur la base d'une partie sélectionnée (18) de l'image, la partie de l'image concernant une zone plus petite que la grande zone surveillée par la caméra, la sélection de la partie d'image pouvant être adaptée et l'adaptation de la sélection de la partie d'image s'effectuant par un opérateur ou automatiquement et
- **en ce que** le défloutage s'effectue sur la base d'une direction sélectionnée d'observation (20), la sélection de la direction d'observation pouvant être adaptée et l'adaptation de la sélection dans la direction d'observation s'effectuant par un opérateur ou automatiquement.

10. Procédé selon la revendication 9, **caractérisé en ce que** l'adaptation d'une partie sélectionnée (18) de l'image et/ou d'une direction sélectionnée d'observation (20) s'effectue automatiquement sur la base du contenu de l'image.

11. Procédé selon l'une des revendications 9 ou 10, **caractérisé en ce que** l'adaptation d'une partie sélectionnée (18) de l'image et/ou d'une direction sélectionnée d'observation (20) est lancée automatiquement lors de l'engagement d'un rapport de transmission arrière.

12. Procédé selon l'une des revendications 9 à 11, **caractérisé en ce que** l'adaptation d'une partie sélectionnée (18) de l'image et/ou d'une direction sélectionnée d'observation (20) s'effectue automatiquement sur la base de l'angle de braquage du véhicule (10).

13. Procédé selon l'une des revendications 9 à 12, **caractérisé en ce que** l'adaptation d'une partie sélectionnée (18) de l'image et/ou d'une direction sélectionnée d'observation (20) s'effectue automatiquement sur la base de la vitesse du véhicule (10).

14. Procédé selon l'une des revendications 9 à 13, **caractérisé en ce que** l'adaptation d'une partie sélectionnée (18) de l'image et/ou d'une direction sélectionnée d'observation (20) s'effectue automatiquement sur la base de l'angle d'inclinaison de la caméra (12) par rapport à la chaussée (30).

15. Procédé selon l'une des revendications 9 à 14, **caractérisé en ce que** la caméra (12) est une caméra HDRC.

16. Procédé selon l'une des revendications 9 à 15, **caractérisé en ce qu'**une sortie de l'unité (14) de traitement d'image agit sur un ensemble (24) d'actionneurs.
